# EUROPEAN PATENT APPLICATION

(11) **EP 1 044 771 A2**
(43) Date of publication of application: **18.10.2000**
(21) Application number: 00303116.8
(22) Date of filing: 13.04.2000
(51) Int. Cl.: B27D 1/10, B27D 1/00

(54) **Veneers**

(30) Priority: 13.04.1999 GB 9908432
(71) Applicant: Creswell, Christopher, Benchill, Manchester M22 8UD (GB)
(72) Inventor: The designation of the inventor has not yet been filed
(74) Representative: Lyons, June Margaret

(57) **Abstract**

Two sheets of a veneer (14A, 14B) for application to a substrate (50) are held together prior to application by a film (20) of a hot melt adhesive adhered to contact surfaces of the respective sheets of veneer such that the film overlies the joint between the sheets. Alternatively, the sheets of veneer are joined by a tape comprising a porous membrane and a hot melt adhesive whereby the tape includes adhesive areas and non-adhesive areas between the adhesive areas, the tape being applied in a similar manner to the film. The linked sheets of veneer may be adhered to the substrate by bringing the veneer contact surfaces into contact with the substrate and applying heat and optionally pressure through the linked veneer assembly to activate the hot melt adhesive. The substrate may also include a laminating adhesive (52) to provide an improved bond between the veneer and the substrate.

## Description

The present invention is concerned with a system for application of sheets of veneer, including applying strips of inlay, to a base.

Veneering involves application of thin sheets of material, typically wood or paper-based materials, to a baseboard, such as chipboard, to provide a desired decorative finish. Such sheets can be less than a millimetre in thickness, actually as thin as is practicable considering difficulties in handling, given fragility and brittleness. Veneers are sometimes referred to in the art as furniture foils when the baseboard forms or will form part of an item of furniture.

Veneered decoration of a base relies on alignment and adjacency of sheets of veneer, as closely as possible. This is typically helped by prelinking adjacent sheets of veneer prior to adhering the co-linked sheets to a base. Linking is currently achieved by, for example, application in a zig-zag of a fibrous or cotton-like thread carrying, usually composed of, an adhesive to the lowermost surface (i.e. the surface which in use will contact the substrate) of the veneer, and adhering the veneer to the base by heat and pressure as by ironing on the upper surface of the veneer. Where inlay is also involved, and effectively separates otherwise adjacent veneer sheet edges, a tape carrying an adhesive is applied to the uppermost, i.e. decorative surface. However, such tapes can be difficult to remove after the veneer and inlay are secured to the baseboard, whether using contact or pressure sensitive adhesive.

In addition, such tapes in particular, can result in undesirable residues on the uppermost surface of the veneer. Application of such tapes to the underside of the veneer sheets, say double-sided as to adhesive as can be required hitherto for repairs, has also proved unsatisfactory, since tape residue can leave a lump under the veneer which is unattractive and undesirable. Also, shearing of double-sided adhesive tape can occur.

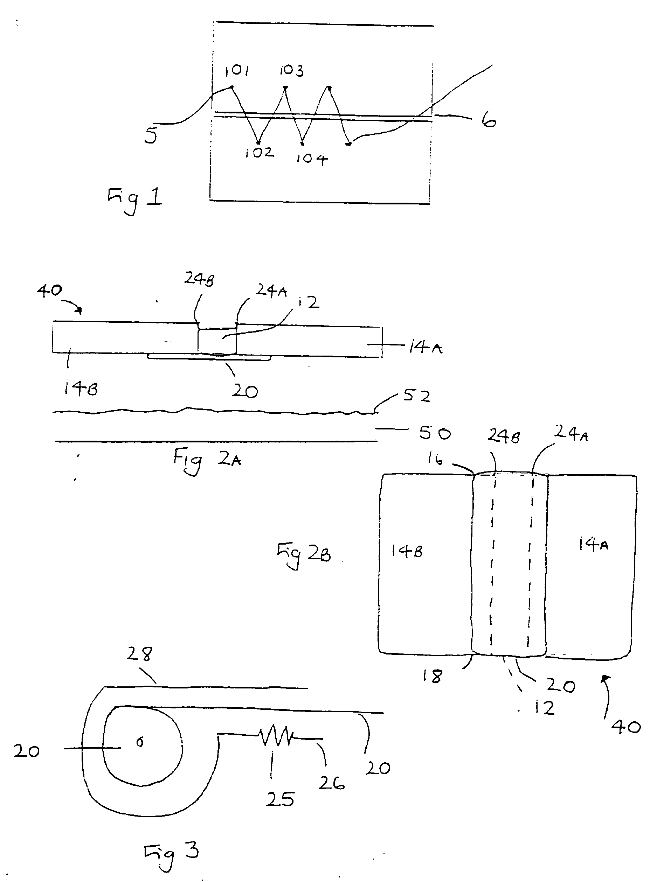

The favoured prior use of filaments or threads of a hot melt adhesive applied to cojoin the contact sides of adjacent sheets of veneer is illustrated in Figure 1, the numbers 101, 102, 103 etc indicating location of possible heat application to activate the adhesive during application by a suitable "stitching" tool. By contact sides or surfaces, it is meant the side or surface of veneer which in use will contact the baseboard. The cojoined sheets are then arranged so that the contact sides of the adjacent sheets face the baseboard which is itself pretreated with a contact or hot melt adhesive. Heat and pressure is applied through the sheets to adhere them to the baseboard.

In more detail, Fig. 1 shows two sheets of veneer 10A and 10B to be linked at adjacent edges indicated generally at 6. Linking is effected using a filament of hot melt glue 5 which is drawn to and fro in a zig-zag fashion across 6. The thread carrier apparatus (not illustrated) includes a heating means which applies heat to activate the hot melt glue at positions labelled 101, 102, 103, 104 etc to give the appearance of zig-zag "stitching" such as could be made by a sewing machine.

However, this method cannot serve to cojoin sheets of veneer separated by strips of inlay.

The present invention seeks to facilitate application of sheets of veneer with or without any strips of inlay to a base and thereby to ameliorate at least some of the aforementioned drawbacks.

According to one aspect of the invention there is provided a ****claim 1.

As well as sheets of veneer, the film may be used to hold together at least two sheets of any laminate layer prior to application to a substrate.

In a second aspect of the invention there is provided a tape applicable across joins between sheets of veneer and any strips of inlay to form a linked veneer assembly for application to a baseboard, the tape including a porous membrane and a hot melt adhesive whereby the tape includes adhesive areas and non-adhesive areas between the adhesive areas such that in use a laminating adhesive can pass through the porous membrane and into the non-adhesive areas of the tape to adhere the linked veneer assembly to the baseboard. Furthermore, the tape may comprise a web of hot melt adhesive which includes adhesive areas and non-adhesive areas, the web preferably having a net-like structure.

In a third aspect of the invention, there is provided a veneer assembly for application to a substrate, the veneer assembly comprising at least two sheets of veneer having respective contract surfaces joined by an adhesive film or a tape as described above with respect to the first and second aspects of the invention respectively.

The adhesive film or the tape may be applied to a contact side of each of the veneer sheets and optionally a contact side of the inlay(s). The veneer assembly is arrangeable such that the contact sides of the sheets (and optionally the inlay(s)) contact the substrate. When the veneer assembly is linked by the hot melt glue film, it may be adhered to the substrate via the hot melt glue film, a separate laminating adhesive or a combination of them. When the veneer assembly is linked by the tape, it may be adhered to the substrate via the separate laminating adhesive.

The at least two sheets of veneer may include a strip of inlay preferably located between two of the sheets or adjacent to a side or end portion of one of the sheets.

In a fourth aspect, the invention provides a method for linking at least two sheets of veneer via respective contact surfaces, and optionally a strip of inlay, for adhering same to a baseboard under application of heat and pressure through an outwardly facing surface of said sheets and inlay, the outwardly facing surface being the surface opposite to the contact surface, which method includes adhering a film of hot melt glue as described in the first aspect of the invention or a tape as described in the second aspect of the invention to the respective contact surfaces of the veneers and optionally the inlay to overlie joins between said sheets of veneer and optionally the strip of inlay.

In a fifth aspect of the invention, there is provided a method of applying a veneer to a substrate, the method including forming a linked veneer assembly by linking respective contact surface of at least two sheets of veneer, and optionally a strip of inlay, by adhering a film as described in the first aspect of the invention or a tape as described in the second aspect of the invention to the respective contact surfaces to overlie joins between adjacent sheets of veneer, and optionally the strip of inlay; arranging the linked veneer assembly such that the contact surfaces of the sheets of veneer, and optionally the strip of inlay, contact the substrate; and adhering the linked veneer assembly to the substrate by applying heat and optionally pressure through the veneer assembly. The step of adhering the linked veneer assembly to the substrate is achieved by re-activating the hot melt glue, and optionally by using a separate laminating adhesive. That is to say the substrate may include a laminating adhesive provided on a surface thereof to adhere the veneer to the substrate.

Conveniently, for ease of handling and application, the film (if used) is provided in the form of a roll, possibly including additives such as additional adhesives or carrier elements, although preferably such additives or elements are dissolvable upon application of heat to the outwardly facing surface of the veneer, thereby to avoid undesirable lumps or deposits being trapped between the veneer and base. By outwardly facing surface, it is meant the surface opposite to the contact surface.

The film is typically dispensed using apparatus having heating means at its exit to activate the hot melt glue.

Embodiments of the invention will now be described in more detail, with reference to the accompanying drawings, in which:
Figure 1 illustrates prior art method for linking sheets of veneer;
Figures 2A and 2B are side and read view as illustrating use of a film of holt melt glue for linking two sheets of veneer and inlay; and
Figure 3 is a schematic illustration of dispenser means for said film.

Figure 1 has been described above.

Turning to Figures 2A and 2B, there are shown two sheets of veneer 14A and 14B disposed at 24A and 24B, either side of a strip of inlay 12. To link the veneer 14A, 14B and inlay 12 together, a thin film of hot melt glue 20 preferably of sufficient width to overlie both 24A and 24B is laid thereover, overlapping onto at least some of the veneer 14A, 14B, starting at end 18, and running down towards end 16 (Figure 2B). Alternatively narrower strips may be applied over each of 24A and 24B. Heat is applied to activate the hot melt glue 20, thereby linking the assembled veneer 14A, 14B and inlay 12. The linked assembly 40 is then arranged so that the surfaces of the veneer 14A, 14B and inlay 12 to which the film 20 has been applied contact a baseboard 50 (e.g. an MDF baseboard) coated with an adhesive 52. Heat and pressure is then applied to the outwardly facing surface of the assembly 40 (i.e. the surface that is not in contact with the baseboard 50). This serves to melt the hot melt glue 20 again, which then spreads and disperses between the assembly 40 and base 50 thereby reducing undesirable lump formation between the linked veneer assembly 40 and the baseboard 50.

Activation of the film of hot melt flue 20 may be effected by heating the glue after it has been positioned to overlie at least 24A and 24B, for example, using heating apparatus akin to an iron. Alternatively, the glue may be heated just prior to being positioned over 24A and 24B, so that once it contacts the veneer 14A, 14B and inlay 12, it will adhere thereto.

For ease of handling, the film may be stored in the form of a roll, with contact adhesive on one side such as illustrated in Figure 3, akin to the way in which adhesive coated plastic tapes such as Sellotape (trade mark) are stored. This figure also illustrates a suitable dispensing apparatus having a heating means 25 disposed adjacent to the film exit 26, thereby heating the film 20 to activate the glue, the heated film being applied to overlie the veneer and inlay shortly thereafter.

To assist ease of handling, additional carrier elements, such as fibres may be incorporated into the film if need be, provided they do not result in undesirable deposits between the veneer-inlay assembly 40 and the baseboard 50.

Additionally or alternatively, a porous adhesive tape may be used to link the sheets of veneer 14A and 14B and optionally strips of inlay 12 together. The tape includes a porous membrane having on one surface thereof a contact adhesive material. Before use, the tape preferably also includes a release sheet releasably adhered to the adhesive material. The release sheet may be a silicone-coated paper sheet or any other type of commercially available release sheet that is compatible with the adhesive material used.

To produce the tape, a web of the contact adhesive material is printed, e.g. by a screen-gravure printing process, onto a release sheet. The web being such that it provides areas of adhesive material separated by areas having no adhesive material, there being sufficient adhesive to link the veneer sheets and optionally inlay strips together. The release sheet is arranged so that the web of adhesive material contacts the porous membrane and the web of adhesive material is laminated to the membrane. The tape including the release sheet may then be cut into sheets and/or strips as desired.

In use, the release sheet is removed and the tape is applied to the sheets of veneer and optionally the strip(s) of inlay in a manner essentially the same as that described above with respect to the film of hot melt glue 20. The adhesive material thus links the sheets of veneer and optionally the strip(s) of inlay together. When the linked assembly is applied to the baseboard 50 and heat and pressure applied, the laminating adhesive 52 can pass through the porous membrane and fill the areas of the adhesive web between the adhesive material (i.e. the non-adhesive area of the web) to fully adhere the veneer to the baseboard 50. In this way, the adhesive tape is located within the laminating adhesive 52 after the veneer has been adhered to the baseboard 50 and as such undesired lumps or protrusions under the veneer can be avoided.

Specific examples of the veneers, inlays, hot melt glue, laminating adhesive, contact adhesive and release sheet described above are all individually commercially available and are known to persons skilled in the art.

Of course, the aforementioned film or tape is equally viable for linking adjacent sheets of veneer in the absence of inlay, although it is in the cases where inlay is desired that prior methods have proved particularly unsatisfactory.

## Claims

1. A film applicable across joins between at least two sheets of veneer which is capable of holding the sheets together for application to a baseboard, the film comprising a hot melt glue.

2. A film according to claim 1 wherein the film consists of a hot melt glue.

3. A tape applicable across joins between at least two sheets of veneer which is capable of holding the sheets together for application to a baseboard, the tape comprising a porous membrane and a hot melt adhesive whereby the tape includes adhesive areas and non-adhesive areas between the adhesive areas.

4. A tape according to claim 3 wherein the porous membrane is provided by a web of hot melt adhesive.

5. A tape according to claim 4 wherein the web of hot melt adhesive has a net-like structure.

6. A veneer assembly for application to a substrate, the veneer assembly comprising at least two sheets of veneer having respective contact surfaces, the respective contact surfaces being joined by an adhesive film according to claim 1 or claim 2, or a tape according to any one of claims 3 to 5.

7. A method for linking at least two sheets of veneer via respective contact surfaces, the method including adhering a film according to claim 1 or claim 2, or a tape according to any one of claim 3 to 5 to the respective contact surfaces to overly joins between the sheets of veneer.

8. A method of applying a veneer assembly to a substrate, the method including forming a linked veneer assembly by linking respective contact surfaces of at least two sheets of veneer by adhering a film according to claim 1 or claim 2 or a tape according to any one of claims 3 to 5 to the respective contact surfaces to overly joins between adjacent sheets of veneer, arranging the linked veneer assembly such that the contact surfaces of the veneers contact the substrate and adhering the linked veneer assembly to the substrate by applying heat and optionally pressure through the veneer assembly.

9. A method according to claim 8 wherein the substrate includes a laminating adhesive provided on a surface thereof.
